# FASCICULE DE BREVET EUROPEEN

(11) **EP 1 585 110 B1**
(45) Date de publication et mention de la délivrance du brevet: **06.12.2006**
(21) Numéro de dépôt: 05290726.8
(22) Date de dépôt: 01.04.2005
(51) Int. Cl.: G10L 15/18, G10L 15/22

(54) **Système d'application vocale**
Vorrichtung für sprachgesteuerte Anwendungen
System for speech controlled applications

(30) Priorité: 02.04.2004 FR 0403511
(43) Date de publication de la demande: 12.10.2005
(73) Titulaire: FRANCE TELECOM, 75015 Paris (FR)
(72) Inventeur: Paillet, Eric, 22730 Tragastel (FR); Dubois, Dominique, 22560 Pleumeur-Bodou (FR); Larreur, Danielle, 22560 Trebeurden (FR)
(74) Mandataire: Habasque, Etienne J. Jean-François

(56) Documents cités:
- US-A- 5 652 897
- TSUBOI H ET AL: "A real-time task-oriented speech understanding system using keyword-spotting" DIGITAL SIGNAL PROCESSING 2, ESTIMATION, VLSI. SAN FRANCISCO, MAR. 23, vol. VOL. 5 CONF. 17, 23 mars 1992 (1992-03-23), pages 197-200, XP010058682 ISBN: 0-7803-0532-9
- JULIE A BACA: "Dialog Systems for Automotive Environments" EUROPEAN CONFERENCE ON SPEECH COMMUNICATION AND TECHNOLOGY (EUROSPEECH), septembre 2003 (2003-09), pages 1929-1932, XP007006773
- NATHALIE COLINEAU ET AL: "A HYBRID APPROACH TO SPOKEN QUERY PROCESSING IN DOCUMENT RETRIEVAL SYSTEM V" ESCA ETRW WORKSHOP, 19 avril 1999 (1999-04-19), pages 31-36, XP007005451

## Description

La présente invention concerne les systèmes automatiques de reconnaissance vocale capables de déclencher une action en fonction d'une phrase prononcée par un utilisateur.

De tels systèmes sont particulièrement utilisés dans les serveurs vocaux des réseaux de télécommunications.

Ces serveurs vocaux sont utilisés au sein d'applications vocales interactives dans lesquelles un dialogue est engagé entre un utilisateur et un automate afin de déterminer l'attente de cet utilisateur.

Ils se composent d'un système de reconnaissance vocale qui fournit une phrase brute prononcée par l'utilisateur et un système d'analyse sémantique qui décompose cette phrase en une suite de mots-clés. De plus, celui-ci possède un ensemble de règles qui associent à un ensemble de mots-clés une action à exécuter. L'analyseur sémantique recherche alors la règle, ou les règles, dont les mots-clés attendus se trouvent dans la phrase prononcée par l'utilisateur.

Si plusieurs règles sont ainsi sélectionnées, l'analyseur sémantique sélectionne la règle la plus pertinente en utilisant des critères tels qu'une pondération probabiliste, le contexte dans lequel la phrase a été prononcée, ...

Ceci a été divulgué dans le document de Tsuboi et. al. : "A real-time task-oriented speech understanding system using keyword spotting ; ICASSP1992, pp. 197-200.

La règle ayant été choisie, l'action qu'elle définit est exécutée par un système de gestion des dialogues. Souvent, dans les serveurs vocaux, l'action correspond à la génération d'une phrase préenregistrée donnant la réponse attendue par l'utilisateur ou bien posant une question permettant de mieux cerner l'attente de celui-ci.

Les techniques actuellement utilisées par les analyseurs sémantiques fonctionnent sur le principe d'une correspondance stricte entre les mots rencontrés dans l'énoncé et les mots attendus dans la règle.

Ainsi, lorsqu'un mot-clé est présent dans l'énoncé, même s'il n'est pas déterminant pour le sens général, il doit se retrouver dans la règle pour que celle-ci soit acceptée.

Or, ce type de fonctionnement est peu adapté aux phrases habituellement rencontrées à l'oral, en particulier parce que ces phrases sont bruitées, grammaticalement incorrectes, mal construites, et comportent souvent des hésitations ou des informations redondantes qui n'ont pas été prévues lors de l'écriture des règles.

Cette sensibilité extrême oblige alors le concepteur à écrire toutes les règles possibles en tenant compte de toutes les erreurs de syntaxe imaginables.

Cet inconvénient limite donc fortement l'utilisation de tels systèmes.

Le but de l'invention est donc de proposer un système d'application vocable qui reconnaisse aisément les règles applicables malgré les bruits et imperfections de la phrase prononcée.

Selon l'invention, un système est revendiqué comme énoncé dans la revendication 1, un procédé comme dans la revendication 5, et un programme comme dans la revendication 9.

L'objet de l'invention est donc un système d'application vocale comportant des moyens d'acquisition d'au moins une phrase prononcée par au moins un utilisateur, connectés à des moyens d'analyse sémantique comportant des moyens de reconnaissance de mots-clés appartenant à la phrase prononcée et aptes à générer une liste ordonnée des mots-clés, appelée énoncé, de la phrase prononcée, lesdits moyens de reconnaissance étant connectés à des moyens d'association, sous forme de règles, entre au moins un mot-clé prédéterminé et une action déterminée et des moyens de sélection d'au moins une action déterminée quand un ensemble de mots-clés contenus dans la règle correspondante sont présents dans la phrase prononcée, caractérisé en ce que les moyens de sélection parcourent pour indentification l'ensemble des règles et recherchent, pour chaque règle donnée, la présence, dans la phrase prononcée, d'un ensemble de mots-clés de cette règle pour sélectionner l'action déterminée correspondante relative à la règle ainsi résolue et identifiée.

Suivant d'autres caractéristiques de l'invention :
- l'ensemble des mots-clés d'une règle est formé de sous-ensembles ordonnés de mots-clés appelés expressions, chaque mot-clé ou expression étant combiné avec d'autres mots-clés ou expressions de sorte qu'au moins deux mots-clés ou expressions sont soit interchangeables, soit présents dans un ordre d'apparition déterminé, ou encore présents dans un ordre quelconque ;
- pour une règle donnée comportant un ensemble d'expressions, les moyens de sélection sélectionnent l'action correspondante quand la règle a été complètement résolue,
sinon ils recherchent dans l'expression courante le premier mot-clé de l'énoncé et,
si le premier mot-clé est trouvé, ils recherchent le reste des mots-clés de l'expression dans l'énoncé et
si cette dernière recherche est infructueuse, l'expression courante est invalidée pour ce premier mot-clé et la recherche reprend,
sinon la règle est résolue et l'action correspondante sélectionnée, et
si le premier mot-clé n'est pas trouvé, la recherche est reprise sur le reste des mots-clés ;
- les moyens d'analyse sémantique comportent en outre des moyens de branchement aptes à déterminer l'action à exécuter parmi l'ensemble des actions sélectionnées.

L'invention sera mieux comprise à la lecture de la description qui va suivre, donnée uniquement à titre d'exemple, et faite en se référant aux dessins annexés, et dans lesquels
- la figure 1 est un schéma d'ensemble de l'invention ;
- la figure 2 est un ordinogramme d'un serveur vocal utilisant l'invention ;
- la figure 3 est un ordinogramme général de l'invention ; et
- la figure 4 est un ordinogramme détaillé de l'invention pour une règle.

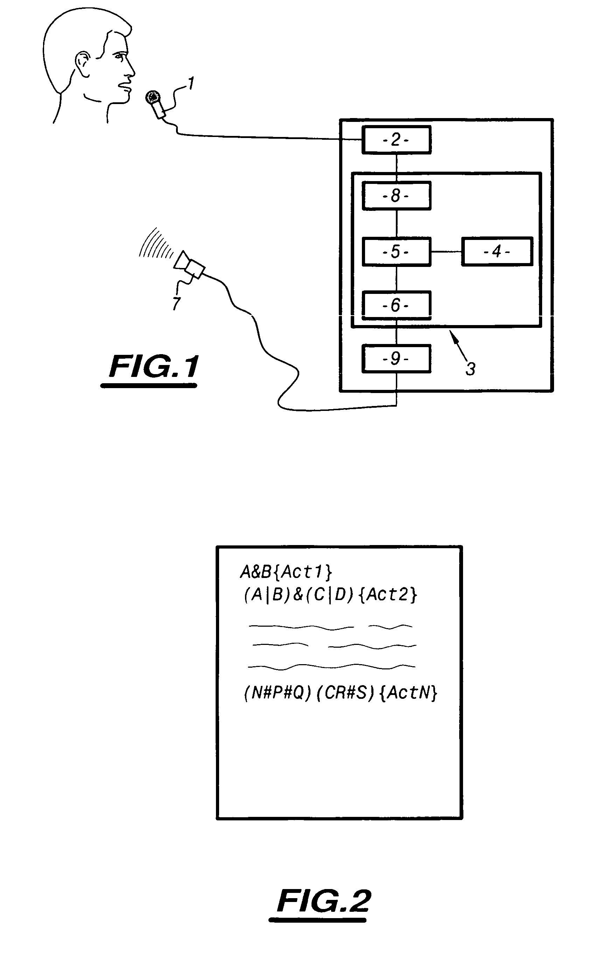

Un système d'application vocale selon l'invention comporte, figure 1, des moyens 1 d'acquisition de phrases prononcées par un utilisateur.

De façon classique, ces moyens d'acquisition se composent d'un microphone, par exemple celui d'un combiné de téléphone, connecté à une carte électronique qui transforme le signal analogique généré par le microphone en une suite de données numériques représentative du signal reçu.

Ces moyens 1 d'acquisition sont connectés à des moyens 2 de reconnaissance vocale.

Ces moyens 2 de reconnaissance utilisent, de façon classique, des technologies de type N-gram bien connues. Des sociétés comme Nuance et Scansoft proposent commercialement de telles technologies particulièrement bien adaptées à la parole continue. D'autres technologies de reconnaissance vocale sont également envisageables sans que cela modifie l'invention.

Les moyens 2 de reconnaissance vocale transforment ainsi la suite de données numériques reçue des moyens d'acquisition 1 en une phrase brute.

Les moyens 3 d'analyse sémantique, ou analyseur sémantique, comportent des moyens 8 de reconnaissance de mots-clés qui transforment la phrase brute en un ensemble ordonné de mots-clés reconnus, ou énoncé.

Ils comportent de plus des moyens d'association 4 entre des mots-clés et des actions. Ces moyens d'association se présentent préférentiellement sous forme de règles du type : <mot-clé 1 > <mot-clé 2> ... <mot-clé N> → action.

Les moyens 3 d'analyse sémantique comportent également des moyens de sélection 5 qui comparent l'ensemble ordonné de mots-clés reconnus dans la phrase prononcée aux différentes règles 4. Les règles 4 correspondant à l'ensemble de mots-clés définissant ainsi l'ensemble des actions potentielles à effectuer.

L'analyseur sémantique 3 comporte également des moyens de branchement 6. Ces moyens de branchement 6 sont utilisés lorsque plusieurs règles ont été sélectionnées afin de déterminer celle dont l'action doit être exécutée.

Une fois l'action choisie, celle-ci est effectuée par des moyens 9 de dialogue qui génèrent une phrase adaptée et la transmettent à l'utilisateur en réponse à la phrase qu'il a émise.

Cette phrase peut être une réponse ou bien une question permettant de préciser l'attente du client et créant ainsi un dialogue entre l'utilisateur et le serveur.

Les actions générées peuvent correspondre également à des commandes d'un automate. Par exemple, un système de contrôle/commande d'un processus peut utiliser un système d'application vocale selon l'invention pour recueillir les ordres d'un opérateur, à la place, ou en complément, des interfaces plus traditionnelles que sont le clavier et l'écran.

L'analyseur sémantique 3 va maintenant être décrit plus précisément dans son mode de fonctionnement.

Comme indiqué précédemment, chaque action est associée à une série de mots-clés ordonnés, le tout correspondant à une règle.

L'ensemble des règles, figure 2, est stocké dans l'analyseur sémantique, par exemple sous forme de fichier. Un mode préférentiel de réalisation consiste à rassembler les règles dans un fichier texte contenant une règle par ligne.

Les mots-clés sont alors ordonnés en utilisant trois opérateurs.

Le premier opérateur, noté &, correspond à l'opérateur ET ordonné. Ainsi A & B indique que les mots-clés A et B doivent être présents et que B suit A dans l'ordre de l'énoncé.

Le deuxième opérateur, noté #, correspond à l'opérateur ET non ordonné. A # B indique que les mots-clés A et B doivent être présents et que l'ordre d'apparition de A et de B dans la phrase est sans importance : AB et BA sont reconnus comme appartenant à cette règle.

Le troisième opérateur, noté I, correspond à l'opérateur OU. A|B indique que l'énoncé doit contenir A ou B, alternativement. Les mots-clés A et B sont donc interchangeables.

Ces trois opérateurs sont combinables entre eux et des parenthèses permettent de définir des groupes de mots-clés.

Par exemple (A|B) & (C#D) indique que la règle est valide pour un énoncé commençant par les mots-clés A ou B suivis de CD ou de DC.

Dans le mode préféré de réalisation de l'invention, l'action à réaliser correspondant à la règle est écrite en fin de ligne, après les mots-clés, et encadrée par des accolades.

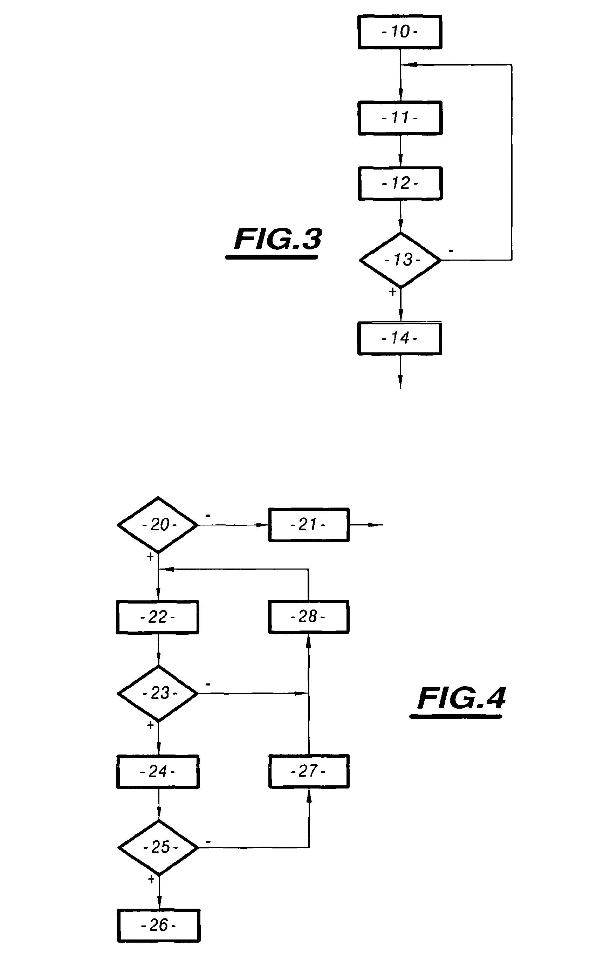

L'analyseur sémantique 3 reçoit figure 3, étape 10, en entrée une phrase sous la forme d'une suite ordonnée de mots-clés, ou énoncé, et possède un ensemble de règles sous forme d'un fichier.

Il lit une première règle en 11 et recherche le mot-clé attendu par celle-ci. Une règle est marquée comme valide en 12 lorsque la suite de mots-clés qu'elle définit se retrouve dans l'énoncé.

Cependant, il peut arriver que des mots attendus dans la règle soient séparés dans l'énoncé par d'autres mots non prévus. Ceux-ci sont alors éliminés et considérés comme du bruit non pertinent.

L'analyseur sémantique essaye cependant systématiquement de vérifier la conformité de la phrase à la règle.

Puis, ayant épuisé toutes les possibilités d'accord ou ayant découvert que la règle s'applique, l'analyseur recherche la règle suivante en 13. Si elle existe, elle est analysée comme précédemment, sinon l'analyseur sémantique transmet en 14 aux moyens de branchement 6 l'ensemble des règles valides.

Ainsi, de manière particulièrement avantageuse, l'analyseur sémantique 3 permet d'ignorer certains mots-clés de l'énoncé et de considérer comme une information non déterminante, c'est-à-dire du bruit, tout ce qui se trouve entre deux mots attendus.

Afin de permettre une exploration complète des possibilités de l'énoncé vis-à-vis de la liste des mots-clés de la règle, l'analyseur sémantique utilise le parcours récursif suivant, figure 4 :
1. si l'expression a été complètement résolue en 20, on a une règle correcte en 21 même s'il reste des mots clés non testés ;
2. sinon recherche en 22 dans l'expression du 1^{er} mot de la liste des mots clés ;
3. si le mot a été trouvé en 23, de la même façon on lance la recherche en 24 avec le reste des mots clés :
   a. Si la recherche avec le reste des mots clé a échoué en 25, on invalide en 27 la sous expression ayant permis de trouver le 1^{er} mot, pour ce 1^{er} mot et uniquement celui-là (on le considère comme du bruit) et on relance la recherche. Le résultat final est alors le résultat de cette nouvelle recherche.
   b. Si la recherche avec le reste des mots a réussi en 25, on a trouvé une règle correcte en 26.
4. si le mot n'a pas été trouvé en 23, on le considère comme du bruit en 28 et on lance la recherche en 22 sur le reste des mots clés. Le résultat final est alors le résultat de cette nouvelle recherche.

Ceci permet un retour en arrière si une sous expression entamée a échoué et qu'il reste des alternatives dans la règle qui n'ont pas été explorées.

Afin de mieux faire comprendre ce fonctionnement, supposons, à titre d'exemple que l'énoncé soit
[Mobile] [Limiter] [Montant] [Payer] [Réduction] [Payer] [Truc] [Cher]
et que la règle définisse l'expression
((Réduction # (Limiter & Montant) # (Payer & Cher)) # Mobile).

Le déroulement de l'algorithme se fait de la façon suivante :
1 - Recherche du mot [Mobile] dans l'expression, succès de la recherche.
2 - Recherche de [Limiter] avec succès, la sous expression (Limiter & Montant) est entamée.
3 - Recherche de [Montant] dans la sous expression entamée, succès. La sous expression (Limiter & Montant) est résolue.
4 - Recherche de [Payer], succès et sous expression (Payer & Cher) entamée.
5 - Recherche de [Réduction] dans la sous expression entamée. Echec de la recherche. On considère [Réduction] comme du bruit et on poursuit.
6 - Recherche du 2ème [Payer] dans la sous expression entamée. Nouvel échec de la recherche. On considère le 2^{ème} [Payer] comme du bruit et on poursuit.
7 - [Truc] n'est pas trouvé non plus dans l'expression entamée. [Truc] est considéré comme du bruit.
8 - Le mot clé [Cher] est recherché dans l'expression entamée. Succès de la recherche du mot [Cher], cependant il ne reste plus de mots clés et l'expression n'a pas été entièrement résolue. On retourne au point 7 avec un échec de la résolution de la règle.
7.1 - [Truc] n'ayant pas été trouvé, on retourne au point 6.
6.1 - [Payer] ayant été considéré comme du bruit on retourne au point 5.
5.1 - Idem avec [Réduction], on retourne au point 4.
4.1 - [Payer] ayant été trouvé, on invalide la sous expression (Payer & Cher) pour la recherche de ce premier [Payer] mais elle reste accessible pour la recherche du 2^{ème} [Payer]. Cette sous expression n'est plus considérée comme entamée. On cherche à nouveau le 1^{er} [Payer]. Cette fois-ci la recherche est un échec puisque la sous expression (Payer & Cher) est inaccessible. On considère le 1^{er} [Payer] comme du bruit et on poursuit.
5.2 - Recherche de [Réduction] qui est trouvé puisque aucune sous expression n'est entamée cette fois-ci.
6.2 - Recherche du 2^{ème} [Payer] qui est trouvé, la sous expression (Payer & Cher) est à nouveau entamée.
7.2 - Recherche de [Truc], échec de la recherche, on le considère donc comme du bruit et on poursuit.
8.1 - Recherche de [Cher] avec succès. L'expression est entièrement résolue donc on a réussi à trouver une règle correcte.

Ainsi, l'invention permet, de manière particulièrement avantageuse, au système de reconnaissance vocale de reconnaître les règles applicables malgré les bruits et imperfections de la phrase prononcée.

## Revendications

1. Système d'application vocale comportant des moyens (1, 2) d'acquisition d'au moins une phrase prononcée par au moins un utilisateur, connectés à des moyens (3) d'analyse sémantique comportant des moyens (8) de reconnaissance de mots-clés appartenant à la phrase prononcée et aptes à générer une liste ordonnée des mots-clés, appelée énoncé, de la phrase prononcée, lesdits moyens de reconnaissance étant connectés à des moyens (4) d'association, sous forme de règles, entre au moins un mot-clé prédéterminé et une action déterminée et des moyens (5) de sélection d'au moins une action déterminée quand un ensemble de mots-clés contenus dans la règle correspondante est présent dans la phrase prononcée, **caractérisé en ce que** les moyens (5) de sélection parcourent pour identification l'ensemble des règles et recherchent, pour chaque règle donnée, la présence, dans la phrase prononcée, d'un ensemble de mots-clés de cette règle pour sélectionner l'action déterminée correspondante relative à la règle ainsi résolue et identifiée.

2. Système d'application vocale selon la revendication 1, **caractérisé en ce que** l'ensemble des mots-clés d'une règle est formé de sous-ensembles ordonnés de mots-clés appelés expressions, chaque mot-clé ou expression étant combiné avec d'autres mots-clés ou expressions de sorte qu'au moins deux mots-clés ou expressions sont soit interchangeables, soit présents dans un ordre d'apparition déterminé, ou encore présents dans un ordre quelconque.

3. Système d'application vocale selon la revendication 2, **caractérisé en ce que**, pour une règle donnée comportant un ensemble d'expressions, les moyens de sélection sélectionnent l'action correspondante quand la règle a été complètement résolue,
sinon ils recherchent dans l'expression courante le premier mot-clé de l'énoncé et,
si le premier mot-clé est trouvé, ils recherchent le reste des mots-clés de l'expression dans l'énoncé et
si cette dernière recherche est infructueuse, l'expression courante est invalidée pour ce premier mot-clé et la recherche reprend,
sinon la règle est résolue et l'action correspondante sélectionnée, et
si le premier mot-clé n'est pas trouvé, la recherche est reprise sur le reste des mots-clés.

4. Système d'application vocale selon l'une quelconque des revendications précédentes, **caractérisé en ce que** les moyens (3) d'analyse sémantique comportent en outre des moyens (6) de branchement aptes à déterminer l'action à exécuter parmi l'ensemble des actions sélectionnées.

5. Procédé de reconnaissance vocale comportant une étape préalable d'association, sous forme de règles, entre au moins un mot-clé prédéterminé et une action déterminée, et comportant en outre les étapes :
- d'acquisition d'au moins une phrase prononcée par au moins un utilisateur,
- d'analyse sémantique incluant une sous-étape de reconnaissance de mots-clés appartenant à la phrase prononcée et une sous-étape de génération d'une liste ordonnée des mots-clés, appelée énoncé, de la phrase prononcée, et
- de sélection d'au moins une action déterminée quand un ensemble de mots-clés contenus dans la règle correspondante sont présents dans la phrase prononcée,
**caractérisé en ce qu**'à l'étape de sélection, on parcourt pour identification l'ensemble des règles et on recherche, pour chaque règle donnée, la présence, dans la phrase prononcée, d'un ensemble de mots-clés de cette règle pour sélectionner l'action déterminée correspondante relative à la règle ainsi résolue et identifiée.

6. Procédé selon la revendication 5, **caractérisé en ce que** l'ensemble des mots-clés d'une règle est formé de sous-ensembles ordonnés de mots-clés appelés expressions, chaque mot-clé ou expression étant combiné avec d'autres mots-clés ou expressions de sorte qu'au moins deux mots-clés ou expressions sont soit interchangeables, soit présents dans un ordre d'apparition déterminé, ou encore présents dans un ordre quelconque.

7. Procédé selon la revendication 6, **caractérisé en ce que**, pour une règle donnée comportant un ensemble d'expressions, à l'étape de sélection,
on sélectionne l'action correspondante quand la règle a été complètement résolue,
sinon on recherche dans l'expression courante le premier mot-clé de l'énoncé et,
si le premier mot-clé est trouvé, on recherche le reste des mots-clés de l'expression dans l'énoncé et
si cette dernière recherche est infructueuse, l'expression courante est invalidée pour ce premier mot-clé et la recherche reprend,
sinon la règle est résolue et l'action correspondante sélectionnée, et
si le premier mot-clé n'est pas trouvé, la recherche est reprise sur le reste des mots-clés.

8. Procédé selon l'une quelconque des revendications 5 à 7, **caractérisé en ce que** l'étape d'analyse sémantique comporte en outre une sous-étape de détermination de l'action à exécuter parmi l'ensemble des actions sélectionnées.

9. Programme d'ordinateur comportant des instructions de programme adaptées à mettre en oeuvre un procédé de reconnaissance vocale selon l'une quelconque des revendications 5 à 8, lorsque ledit programme est exécuté par un système informatique.

10. Support d'informations lisible par un ordinateur, sur lequel est stocké un programme d'ordinateur selon la revendication 9.

## Claims

1. Voice application system comprising means (1, 2) for acquiring at least one phrase spoken by at least one user, which means (1, 2) are connected to semantic analysis means (3) comprising means (8) for recognizing keywords belonging to the spoken phrase and able to generate an ordered list of keywords, called an utterance, of the spoken phrase, the said recognition means being connected to means (4) providing an association, in the form of rules, between at least one predetermined keyword and a defined action and means (5) for selecting at least one defined action when a set of keywords contained in the corresponding rule is present in the spoken phrase, **characterized in that** the selection means (5) run through, for identification purposes, the set of rules and, for each given rule, search for the presence, in the spoken phrase, of a set of keywords **in that** rule in order to select the corresponding defined action relating to the rule thus solved and identified.

2. Voice application system according to Claim 1, **characterized in that** the set of keywords in a rule is formed of ordered subsets of keywords called expressions, each keyword or expression being combined with other keywords or expressions such that at least two keywords or expressions are either interchangeable, or present in a defined order of appearance, or present in any order.

3. Voice application system according to Claim 2, **characterized in that**, for a given rule comprising a set of expressions,
the selection means select the corresponding action when the rule has been completely solved,
otherwise they search in the current expression for the first keyword of the utterance, and,
if the first keyword is found, they search for the remaining keywords of the expression in the utterance, and,
if the latter search is fruitless, the current expression is invalidated for this first keyword and the search resumes,
otherwise the rule is solved and the corresponding action selected, and,
if the first keyword is not found, the search is resumed on the remaining keywords.

4. Voice application system according to any one of the preceding claims, **characterized in that** the semantic analysis means (3) additionally comprise branching means (6) able to determine the action to be executed from the set of selected actions.

5. Voice recognition method comprising a preliminary step providing an association, in the form of rules, between at least one predetermined keyword and a defined action, and additionally comprising steps for:
- acquiring at least one phrase spoken by at least one user,
- semantic analysis including a substep for recognizing keywords belonging to the spoken phrase and a substep for generating an ordered list of keywords, called an utterance, of the spoken phrase, and
- selecting at least one defined action when a set of keywords contained in the corresponding rule is present in the spoken phrase,
**characterized in that** at the selection step, for identification purposes, the set of rules is run through and a search is carried out, for each given rule, for the presence, in the spoken phrase, of a set of keywords **in that** rule in order to select the corresponding defined action relating to the rule thus solved and identified.

6. Method according to Claim 5, **characterized in that** the set of keywords in a rule is formed of ordered subsets of keywords called expressions, each keyword or expression being combined with other keywords or expressions such that at least two keywords or expressions are either interchangeable, or present in a defined order of appearance, or present in any order.

7. Method according to Claim 6, **characterized in that**, for a given rule comprising a set of expressions, at the selection step,
the corresponding action is selected when the rule has been completely solved,
otherwise a search is carried out in the current expression for the first keyword of the utterance, and,
if the first keyword is found, a search is carried out for the remaining keywords of the expression in the utterance, and,
if the latter search is fruitless, the current expression is invalidated for this first keyword and the search resumes, otherwise the rule is solved and the corresponding action selected, and,
if the first keyword is not found, the search is resumed on the remaining keywords.

8. Method according to any one of Claims 5 to 7, **characterized in that** the semantic analysis step additionally comprises a substep for determining the action to be executed from the set of selected actions.

9. Computer program comprising program instructions adapted to implement a voice recognition method according to any one of Claims 5 to 8, when the said program is executed by a computer system.

10. Information medium that can be read by a computer, on which there is stored a computer program according to Claim 9.

## Patentansprüche

1. Sprachanwendungssystem, das Mittel (1, 2) zur Erfassung mindestens eines von mindestens einem Benutzer ausgesprochenen Satzes aufweist, die mit Mitteln (3) zur semantischen Analyse verbunden sind, die Mittel (8) zur Erkennung von zum gesprochenen Satz gehörenden Schlüsselwörtern, die ausgelegt sind, um eine geordnete Liste der Schlüsselwörter, Wortlaut genannt, des gesprochenen Satzes zu erzeugen, wobei die Erkennungsmittel mit Mitteln (4) zur Zuordnung, in Form von Regeln, zwischen mindestens einem vorbestimmten Schlüsselwort und einer bestimmten Aktion verbunden sind, und Mittel (5) zur Auswahl mindestens einer bestimmten Aktion aufweisen, wenn eine Einheit von in der entsprechenden Regel enthaltenen Schlüsselwörtern in dem ausgesprochenen Satz vorhanden ist, **dadurch gekennzeichnet, dass** die Auswahlmittel (5) zur Identifikation die Gesamtheit der Regeln durchlaufen und für jede gegebene Regel das Vorhandensein einer Einheit von Schlüsselwörtern dieser Regel im gesprochenen Satz suchen, um die entsprechende bestimmte Aktion bezüglich der so gelösten und identifizierten Regel auszuwählen.

2. Sprachanwendungssystem nach Anspruch 1, **dadurch gekennzeichnet, dass** die Einheit der Schlüsselwörter einer Regel aus geordneten Untereinheiten von Schlüsselwörtern, Ausdrücke genannt, gebildet wird, wobei jedes Schlüsselwort oder jeder Ausdruck mit anderen Schlüsselwörtern oder Ausdrücken kombiniert wird, so das mindestens zwei Schlüsselwörter oder Ausdrücke entweder untereinander austauschbar oder in einer bestimmten Reihenfolge des Auftretens oder auch in einer beliebigen Reihenfolge vorhanden sind.

3. Sprachanwendungssystem nach Anspruch 2, **dadurch gekennzeichnet, dass** für eine gegebene Regel, die eine Einheit von Ausdrücken aufweist,
die Auswahlmittel die entsprechende Aktion auswählen, wenn die Regel vollständig gelöst wurde,
sie ansonsten im laufenden Ausdruck das erste Schlüsselwort des Wortlauts suchen, und
wenn das erste Schlüsselwort gefunden ist, sie den Rest der Schlüsselwörter des Ausdrucks im Wortlaut suchen, und
wenn diese letzte Suche erfolglos ist, der laufende Ausdruck für dieses erste Schlüsselwort invalidiert und die Suche wieder aufgenommen wird,
ansonsten die Regel gelöst ist und die entsprechende Aktion ausgewählt wird, und
wenn das erste Schlüsselwort nicht gefunden wird, die Suche im Rest der Schlüsselwörter wieder aufgenommen wird.

4. Sprachanwendungssystem nach einem der vorhergehenden Ansprüche, **dadurch gekennzeichnet, dass** Mittel (3) zur semantischen Analyse außerdem Verzweigungsmittel (6) aufweisen, die ausgelegt sind, um unter der Gesamtheit der ausgewählten Aktionen die auszuführende Aktion zu bestimmen.

5. Spracherkennungsverfahren, das einen vorhergehenden Schritt der Zuordnung, in Form von Regeln, zwischen mindestens einem vorbestimmten Schlüsselwort und einer bestimmten Aktion aufweist, und das außerdem folgende Schritte aufweist:
- Erfassung mindestens eines von mindestens einem Benutzer gesprochenen Satzes,
- die semantische Analyse, die einen Unterschritt der Erkennung von zum gesprochenen Satz gehörenden Schlüsselwörtern und einen Unterschritt der Erzeugung einer geordneten Liste von Schlüsselwörtern, Wortlaut genannt, des gesprochenen Satzes aufweist, und
- Auswahl mindestens einer bestimmten Aktion, wenn eine Einheit von in der entsprechenden Regel enthaltenen Schlüsselwörtern im gesprochenen Satz vorhanden sind,
**dadurch gekennzeichnet, dass** im Auswahlschritt zur Identifikation die Gesamtheit der Regeln durchlaufen und für jede gegebene Regel nach dem Vorhandensein einer Einheit von Schlüsselwörtern dieser Regel im gesprochenen Satz gesucht wird, um die entsprechende bestimmte Aktion bezüglich der so gelösten und identifizierten Regel auszuwählen.

6. Verfahren nach Anspruch 5, **dadurch gekennzeichnet, dass** die Einheit der Schlüsselwörter einer Regel aus geordneten Untereinheiten von Schlüsselwörtern, Ausdrücke genannt, besteht, wobei jedes Schlüsselwort oder jeder Ausdruck mit anderen Schlüsselwörtern oder Ausdrücken kombiniert wird, so dass mindestens zwei Schlüsselwörter oder Ausdrücke entweder austauschbar oder in einer bestimmten Reihenfolge des Auftretens oder auch in einer beliebigen Reihenfolge vorhanden sind.

7. Verfahren nach Anspruch 6, **dadurch gekennzeichnet, dass** für eine gegebene Regel, die eine Einheit von Ausdrücken enthält, im Auswahlschritt die entsprechende Aktion ausgewählt wird, wenn die Regel vollständig gelöst wurde,
sonst im laufenden Ausdruck das erste Schlüsselwort des Wortlauts gesucht wird, und
wenn das erste Schlüsselwort gefunden wird, der Rest der Schlüsselwörter des Ausdrucks im Wortlaut gesucht wird, und
wenn diese letzte Suche erfolglos ist, der laufende Ausdruck für dieses erste Schlüsselwort invalidiert und die Suche wieder aufgenommen wird,
ansonsten die Regel gelöst ist und die entsprechende Aktion ausgewählt wird, und
wenn das erste Schlüsselwort nicht gefunden wird, die Suche unter dem Rest der Schlüsselwörter wieder aufgenommen wird.

8. Verfahren nach einem der Ansprüche 5 bis 7, **dadurch gekennzeichnet, dass** der Schritt der semantischen Analyse außerdem einen Unterschritt der Bestimmung der auszuführenden Aktion unter der Gesamtheit der ausgewählten Aktionen aufweist.

9. Computerprogramm, das Programmbefehle aufweist, die ausgelegt sind, um ein Spracherkennungsverfahren nach einem der Ansprüche 5 bis 8 anzuwenden, wenn das Programm von einem Datenverarbeitungssystem ausgeführt wird.

10. Computerlesbarer Datenträger, in dem ein Computerprogramm nach Anspruch 9 gespeichert ist.
